# FASCICULE DE BREVET EUROPEEN

(11) **EP 0 611 176 B1**
(45) Date de publication et mention de la délivrance du brevet: **26.03.1997**
(21) Numéro de dépôt: 94400084.3
(22) Date de dépôt: 13.01.1994
(51) Int. Cl.: F25D 3/11, A23L 3/375

(54) **Dispositif de congélation à couloir vibrant**
Schwingrinnenvorrichtung zum Gefrieren
Vibrating trough freezing device

(30) Priorité: 10.02.1993 FR 9301472
(43) Date de publication de la demande: 17.08.1994
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Germain, Jean-Pierre, F-78180 Montigny-Les-Bretonneux (FR)
(74) Mandataire: Le Moenner, Gabriel

(56) Documents cités:
- EP-A- 0 115 242
- DE-C- 847 877
- FR-A- 2 212 521
- FR-A- 2 674 320

## Description

La présente invention concerne les dispositifs pour la congélation de produits, du type comportant un couloir vibrant comprenant une paroi de fond sur laquelle les produits congelés se déplacent en contact avec au moins un film de gaz liquéfié.

Des dispositifs de ce type sont connus du document FR-A-2.212.521, où le couloir vibrant forme une auge contenant un bain de gaz liquéfié, et FR-A-2.674.320, où les produits sont mis en contact avec un film de gaz liquéfié de faible épaisseur convenant à la majorité des applications. Dans les dispositifs connus, la paroi de fond du couloir vibrant est constituée d'une tôle métallique lisse réputé favoriser l'étalement du film de liquide et la glisse sans heurt des produits. La Demanderesse a toutefois constaté que, pour les produits ne présentant pas une forme extérieure très irrégulière, et en particulier pour de tels produits de dimensions transversales supérieures à 3 cm ou sensiblement planes, le contact prolongé entre une surface sensiblement plane du produit et la tôle lisse du fond du couloir ne permettait pas une bonne circulation du gaz liquéfié sous le produit et entraînait en conséquence des gradients de congélation notables dans ce dernier.

La présente invention a précisément pour objet de proposer un dispositif perfectionné du type ci-dessus permettant, de façon simple, efficace et peu coûteuse, d'obvier à ces inconvénients et de permettre de réaliser une congélation convenable de produits divers, notamment alimentaires, avec des films de gaz liquéfié de faible épaisseur.

Pour ce faire, selon une caractéristique de l'invention, la paroi de fond du couloir vibrant présente un motif alterné de parties en saillie et de parties en creux.

Selon des caractéristiques plus particulières de l'invention :
- les parties en saillie forment un motif régulier et se raccordent avantageusement continûment aux parties en creux ;
- par rapport aux parties en creux, la hauteur des parties en saillie est inférieure à l'épaisseur du film de gaz liquéfié, typiquement n'excède pas la moitié de l'épaisseur de ce dernier.

D'autres caractéristiques et avantages de la présente invention ressortiront de la description suivante d'un mode de réalisation, donnée à titre illustratif mais nullement limitatif, faite en relation avec les dessins annexés, sur lesquels :
- la figure 1 est une vue schématique en coupe transversale d'un dispositif de congélation à couloir vibrant selon l'invention ;
- les figures 2 et 3 sont des vues partielles respectivement de dessus et en coupe transversale d'un mode de réalisation d'une paroi de fond de couloir vibrant selon l'invention.

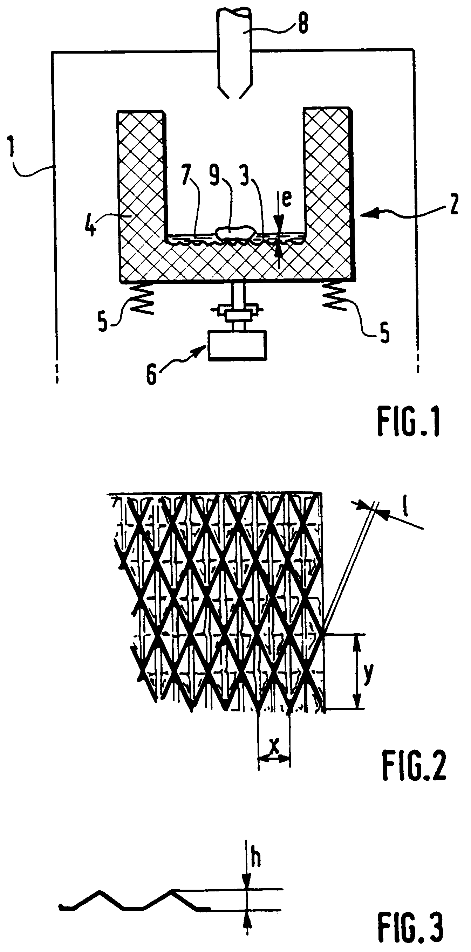

Sur la figure 1, on reconnaît un dispositif de congélation du type selon le document FR-A-2.674.320 sus-mentionné, comprenant, dans une enceinte isolée 1, un couloir vibrant 2, en forme d'auge en U, comprenant notamment une paroi de fond sensiblement horizontale 3 disposée sur une structure isolante 4 rigidifiant le couloir, l'ensemble étant monté sur des supports élastiques 5 et soumis à des mouvements de vibration de faible fréquence par un générateur de vibrations 6 du type à moteur électrique ou à vérin hydraulique. Sur le fond 3 du couloir vibrant 2 est formé un film 7 de gaz liquéfié, typiquement de l'azote liquide, entretenu par déversement de liquide en provenance d'un déversoir 8. A une extrémité de chargement du couloir 2 sont disposés, sur le fond 3 recouvert de film de liquide 7, des articles 9 qui sont acheminés vers l'extrémité opposée du couloir sous l'effet des vibrations imparties à ce dernier en subissant le long du trajet un refroidissement énergique par contact avec le film de gaz liquéfié 7.

Selon l'invention, au moins le fond 3 du couloir 2 est conformé pour présenter un motif alterné, avantageusement régulier, de parties en saillie et de parties en creux, la hauteur h (figure 3) des parties en saillie, rapportée par rapport aux parties en creux, étant toujours inférieure à l'épaisseur e du film de gaz liquéfié, typiquement inférieure à la moitié, avantageusement au tiers de cette épaisseur e, de façon à permettre normalement un recouvrement de ces parties en saillie par le gaz liquéfié et à autoriser en permanence une circulation de gaz liquéfié dans les parties en creux quelles que soient les formes des surfaces et les dimensions des produits à congeler acheminés le long du couloir. Avantageusement, les parties en creux communiquent les unes avec les autres pour éviter la formation de poches isolées de liquide.

Les parties en creux et en saillie sont conformées de façon à se raccorder continûment, c'est-à-dire sans arêtes ou discontinuités de tangentes, les unes aux autres, pour faciliter le nettoyage, fréquent dans le domaine alimentaire.

Dans le mode de réalisation particulier représenté sur les dessins, la paroi de fond, ainsi que, avantageusement, l'ensemble des surfaces internes du couloir 2, est réalisée à partir d'une tôle gaufrée en acier inoxydable pour usage alimentaire, d'une épaisseur de 1,3 mm présentant un motif alterné de losanges de grandes dimensions y de 9 mm, de petites dimensions x de 4,5 mm, de hauteur h de 1,5 mm (pour un film de liquide d'épaisseur e supérieure à 3 mm) et laissant entre eux des cheneaux d'écoulement de largeur l égale à 1 mm.

Quoique la présente invention ait été décrite en relation avec des modes de réalisation particuliers, elle ne s'en trouve pas limitée pour autant mais est au contraire susceptible de modifications et de variantes contenues dans les revendications ci-jointes et qui apparaîtront à l'homme de l'art. En particulier, la forme du trajet défini par le couloir vibrant peut être rectiligne, courbe ou circulaire. Selon cette forme, le fond du couloir peut également présenter une configuration nervurée ou rainurée, dans le sens d'avancement des produits, les nervures étant régulièrement interrompues pour permettre la circulation de liquide.

## Revendications

1. Dispositif pour la congélation de produits, comportant un couloir vibrant (2) comprenant une paroi de fond (3) sur laquelle les produits à congeler (9) se déplacent en contact avec au moins un film de gaz liquéfié (7), caractérisé en ce que la paroi de fond (3) présente un motif alterné de parties en saillie et de parties en creux.

2. Dispositif selon la revendication 1, caractérisé en ce que les parties en saillie sont réparties suivant un motif régulier.

3. Dispositif selon la revendication 1 ou la revendication 2, caractérisé en ce que les parties en saillie se raccordent continûment aux parties en creux.

4. Dispositif selon l'une des revendications précédentes, caractérisé en ce que, par rapport aux parties en creux, la hauteur (h) des parties en saillie est inférieure à l'épaisseur (e) du film de gaz liquéfié.

5. Dispositif selon la revendication 4, caractérisé en ce que la hauteur (h) des parties en saillie n'excède pas la moitié de l'épaisseur (e) du film de gaz liquéfié.

6. Dispositif selon l'une des revendications précédentes, caractérisé en ce que les parties en saillie ont une hauteur constante (h).

7. Dispositif selon l'une des revendications précédentes, caractérisé en ce qu'au moins la paroi de fond (3) est constituée d'une tôle gaufrée.

8. Dispositif selon la revendication 7, caractérisé en ce que la tôle gaufrée est en acier inoxydable.

## Patentansprüche

1. Vorrichtung zum Einfrieren von Produkten, umfassend eine Schüttelrinne (2) mit einer Bodenwandung (3), auf der sich die einzufrierenden Produkte (9) in Kontakt mit zumindest einem Film aus verflüssigtem Gas fortbewegen, dadurch gekennzeichnet, daß die Bodenwandung (3) ein wechselndes Muster von hervorstehenden und vertieften Abschnitten aufweist.

2. Vorrichtung nach Anspruch 1, dadurch gekennzeichnet, daß die hervorstehenden Abschnitte einem regelmäßigen Muster folgend verteilt sind.

3. Vorrichtung nach Anspruch 1 oder 2, dadurch gekennzeichnet, daß die hervorstehenden Abschnitte im Anschluß auf die vertieften Abschnitte folgen.

4. Vorrichtung nach einem der vorangehenden Ansprüche, dadurch gekennzeichnet, daß bezüglich der vertieften Abschnitte die Höbe (h) der hervorstehenden Abschnitte kleiner ist als die Dicke (e) des Films aus verflüssigtem Gas.

5. Vorrichtung nach Anspruch 4, dadurch gekennzeichnet, daß die Höhe (h) der hervorstehenden Abschnitte die halbe Dicke (e) des Films aus verflüssigtem Gas nicht übersteigt.

6. Vorrichtung nach einem der vorangehenden Ansprüche, dadurch gekennzeichnet, daß die hervorstehenden Abschnitte eine gleichbleibende Höhe (h) haben.

7. Vorrichtung nach einem der vorangehenden Ansprüche, dadurch gekennzeichnet, daß zumindest die Bodenwandung (3) aus einem Prägeblech besteht.

8. Vorrichtung nach Anspruch 7, dadurch gekennzeichnet, daß das Prägeblech aus rostfreiem Stahl besteht.

## Claims

1. Device for freezing products, having a vibrating chute (2) comprising a bottom wall (3) on which the products to be frozen (9) move in contact with at least one film of liquefied gas (7), characterized in that the bottom wall (3) possesses an alternating pattern of projecting portions and hollow portions.

2. Device according to claim 1, characterized in that the projecting portions are distributed in a regular pattern.

3. Device according to claim 1 or claim 2, characterized in that the projecting parts are linked continuously with the hollow portions.

4. Device according to one of the preceding claims, characterized in that, in relation to the hollow portions, the height (h) of the projecting portions is less than the thickness (e) of the film of liquefied gas.

5. Device according to claim 4, characterized in that the height (h) of the projecting portions does not exceed half the thickness (e) of the film of liquefied gas.

6. Device according to one of the preceding claims, characterized in that the projecting portions have a constant height (h).

7. Device according to one of the preceding claims, characterized in that at least the bottom wall (3) consists of an embossed steel sheet.

8. Device according to claim 7, characterized in that the embossed steel sheet is made of stainless steel.
